# EUROPEAN PATENT SPECIFICATION

(11) **EP 0 930 005 B1**
(45) Date of publication and mention of the grant of the patent: **16.10.2002**
(21) Application number: 99100391.4
(22) Date of filing: 18.01.1999
(51) Int. Cl.: A01K 5/00

(54) **Truck for shredding and mixing products for zootechnical use**
Wagen zum Zerreissen und Mischen von Material für zoologische Anwendungen
Véhicule pour désintégrer et mélanger des produits zootechniques

(30) Priority: 20.01.1998 IT PD980008 U
(43) Date of publication of application: 21.07.1999
(73) Proprietor: Unifast S.r.l., 35023 Bagnoli di Sopra (Padova) (IT)
(72) Inventor: Faccia, Alessandra, 35021 Agna (Padova) (IT)
(74) Representative: Modiano, Guido, Dr.-Ing.

(56) References cited:
- EP-A- 0 387 547
- EP-A- 0 574 942
- EP-A- 0 754 405
- SU-A- 1 066 512

## Description

The present invention relates to a truck for shredding and mixing products for zootechnical use.

It is known that combined shredding and mixing trucks are already currently commercially available which substantially comprise a chassis with wheels, suitable to facilitate transport, whereon a substantially frustum-shaped container is fixed. The container is internally provided with one or more vertical mixing scrolls.

Each scroll is welded to a shaft which is rotationally coupled to the bottom of the container and is turned by means of adapted hydraulic and mechanical transmissions which are kinematically connected to actuation elements, such as for example the power take-off of a tractor or directly the engine in the case of a self-propelled truck.

The products to be mixed, particularly coarse or fibrous forage with mineral protein additives together with concentrates such as flours, mashes, pulps etcetera, are loaded from above, while the product ready for feeding is discharged through an outlet with an opening and closure door which is present on the lateral part of the container, usually in the front region of the truck.

In order to facilitate the distribution of the product, under the discharge outlet there is a hydraulically-actuated conveyor belt.

A drawback that has been noted in these trucks is the fact that the conveyor belt, due to problems related to transport, must not protrude considerably from the overall width profile of the truck and is therefore too short to distribute, at the outlet, the mixed product to the intended regions, which are often located far beyond the space occupied by the truck.

Improvements to the above-described truck have led to the production of a mixing truck which is fully similar to the one described but has a container whereto the support of a discharging conveyor belt is rigidly coupled, said belt being movably coupled to said support.

The proposed improvement, however, is not final, since it does not fully solve distribution problems because it does not allow the operator, whether on the towing vehicle or in the cabin of the truck if self-propelled, an adequate view of the distribution process occurring at the outlet of the container.

Moreover, conventional mixing trucks have an inspection ladder in their front part, in practice above the conveyor belt.

Although the presence of the conveyor belt and of the ladder with an inspection platform is absolutely necessary from a practical point of view, it induces considerable problems as regards spaces and weighing, which must be performed both to obtain the intended dosages of the various substances with respect to each other and to know the exact amount of fodder distributed to the livestock.

Document EP 0 387 547 discloses the features in the preamble of claim 1.

The aim of the present invention is to provide an improved truck for shredding and mixing products for zootechnical use which solves the above-mentioned drawbacks in known cases and is provided in particular with fodder distribution means whose position and profile do not interfere with the troughs, which are often provided with relatively high walls.

Within the scope of this aim, an important object of the present invention is to provide a truck which allows the operator to adequately view the distribution process.

A further object of the present invention is to provide a truck in which it is also possible to serve litters at a distance from said truck which exceeds its transverse profile.

A further object of the present invention is to provide a truck in which the distribution means provide space optimization.

A further object of the present invention is to provide a truck which can be manufactured with known technologies and at competitive costs with respect to known trucks.

This aim, these objects and others which will become apparent hereinafter are achieved by a truck for shredding and mixing products for zootechnical use, which comprises, on a self-propelled or towed wheeled chassis, a mixing container which contains one or more rotating scrolls provided with shredding blades, said container having a front opening for the passage of shredded and mixed fodder, said opening being associated with a closure door which has a vertical shutter-like movement, characterized in that it comprises, at the outlet of said opening, two continuous conveyance elements for conveying and distributing the fodder, a first one of said conveyance elements being arranged longitudinally with respect to the chassis and being arranged adjacent to said opening, a second one of said conveyance elements being arranged transversely with respect to said first one, from which it receives the fodder.

Further characteristics and advantages of the present invention will become apparent from the following detailed description of two embodiments thereof, illustrated only by way of non-limitative example in the accompanying drawings, wherein:
Figure 1 is a side view of a truck according to the invention in a first embodiment;
Figure 2 is a rear view of the truck of Figure 1;
Figure 3 is a perspective view of a detail of the truck of Figure 1;
Figure 4 is a side view of a truck according to the invention in a second embodiment;
Figure 5 is a plan view of the truck of Figure 4.

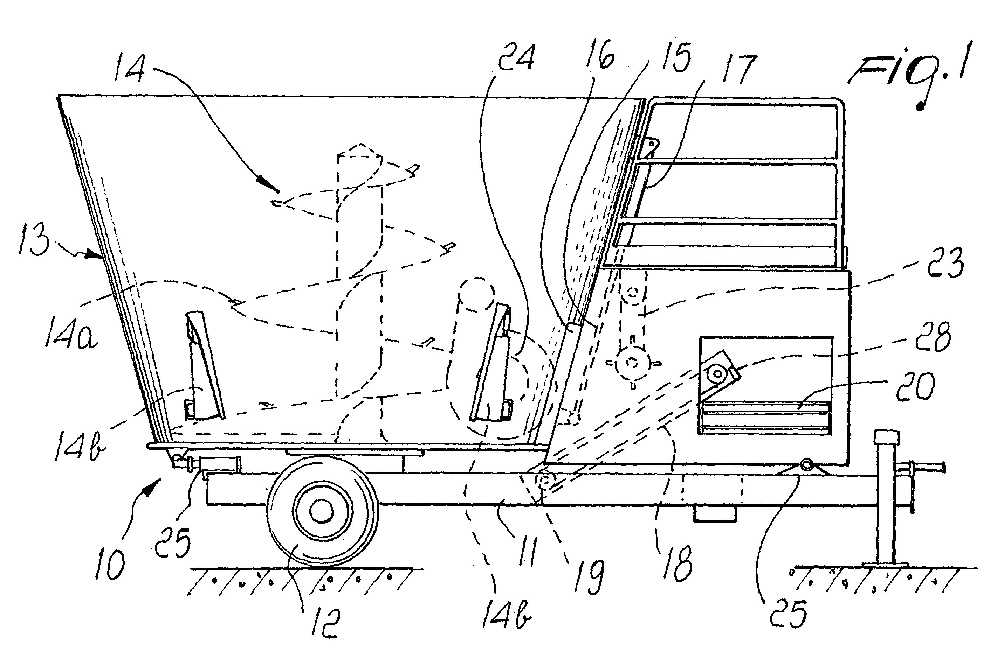

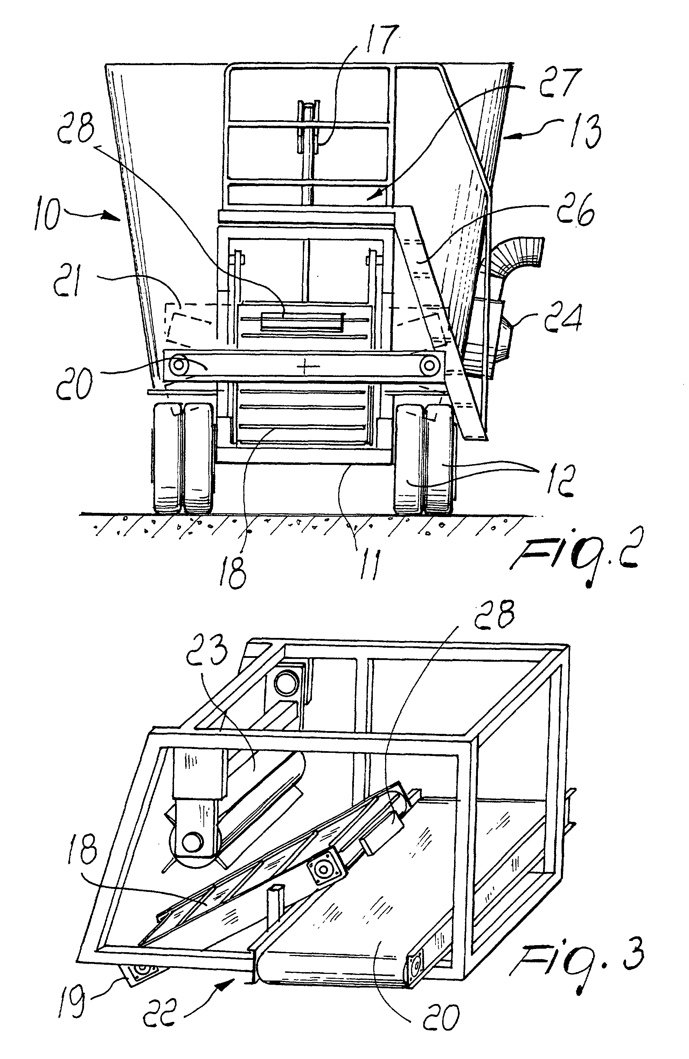

With particular reference to Figures 1 to 3, a truck for shredding and mixing products for zootechnical use, according to the invention, is generally designated by the reference numeral 10 in a first embodiment.

The truck 10 is of the towed type and comprises, on a chassis 11 with wheels 12, a frustum-shaped container 13 which tapers downward and is provided with a scroll 14, shown in dashed lines in the figures, which rotates about a vertical axis and has an external profile which lies on a substantially conical imaginary surface.

Shredder blades 14a are mounted at said profile and cooperate with complementary blades 14b which can be arranged so as to protrude internally from the container 13.

In particular, the container 13 has an opening 15 for the passage of shredded and mixed fodder which faces the direction of motion of the truck 10, in this case in a front position, and is associated with a closure door 16 which has a vertical shutter-like movement which is produced in this case by an actuator 17 associated with the container 13.

The truck 10 comprises at the outlet, at the opening 15, two continuous conveyance elements which are constituted in this case by two conveyor belts for conveying and distributing the fodder. A first conveyance element 18 is arranged longitudinally with respect to the chassis 11 and is inclined with respect to the ground, with a lower end 19 which is adjacent to the opening 15, and a second conveyance element 20, is arranged transversely to the first one 18 and is adjacent to the upper end thereof, from which it receives the fodder.

In other cases it is possible to provide other conveyance elements, such as scroll conveyors.

In particular, the second conveyor belt 20 has, along the edge that is external with respect to the container 13, a gate 21 (shown in dashed lines in the Figures), which in this case can be turned over outward.

Moreover, the second conveyor belt 20 is fixed to a supporting structure, designated by the reference numeral 22, which oscillates and is moved by the corresponding actuation means, not shown (for example a hydraulic cylinder), with a rotation axis which is substantially parallel to the longitudinal axis of the chassis 11.

The second conveyor belt 20 is also movably supported by the structure 22 so that it can perform a translatory motion, in association with corresponding actuation means, not shown (in this case also, for example, a hydraulic cylinder), in a direction which is parallel to its longitudinal extension so as to protrude from the transverse dimensions of the truck 10.

The latter movement, in particular, allows to combine dimensions of the truck 10 which are adapted for transporting it even during operation with the need to serve even fodder distribution regions which greatly exceed its transverse dimensions.

As an alternative, the first belt can be extendable.

The truck 10, in this case, is also provided with a finned roller 23 which is arranged above the first conveyor belt 18 and is adapted to improve dosage and prevent the occurrence of reverse flows or stagnations of fodder on the belt.

The roller 23 can also be supported by a pivoted structure which allows it to perform oscillating motions (for example by means of a hydraulic cylinder) in order to make it at least partially enter the container 13.

As an alternative it is possible to provide a simple gate located in front of the opening 15.

At least one magnet 28 can also cooperate with at least one of the two belts, preferably with the first one. The magnet is mounted adjacent to the product passage region and is adapted to retain any potentially damaging metal pieces.

The truck 10 also has, in this case, a blower 24 for aspirating the shredded product, if only straw is introduced, and for discharging it so as to form litters.

It is possible to provide various positions of the blower 24 depending on the operating requirements, for example above the conveyor belt 18 or on the other side of the truck 10.

As already mentioned, the supporting structure 22, which in this case is at least partially formed by means of tubular elements, supports the second conveyor belt 20, the first conveyor belt 18 and the container 13, so that they are mutually rigidly coupled and rest on common load cells 25, so that it is possible to weigh the fodder without the influence of irrelevant weights.

The truck 10 is also provided with a ladder 26 with an inspection platform 27 which is supported by the chassis 11 and is entirely independent of the structure 22, with which it does not interfere in any way.

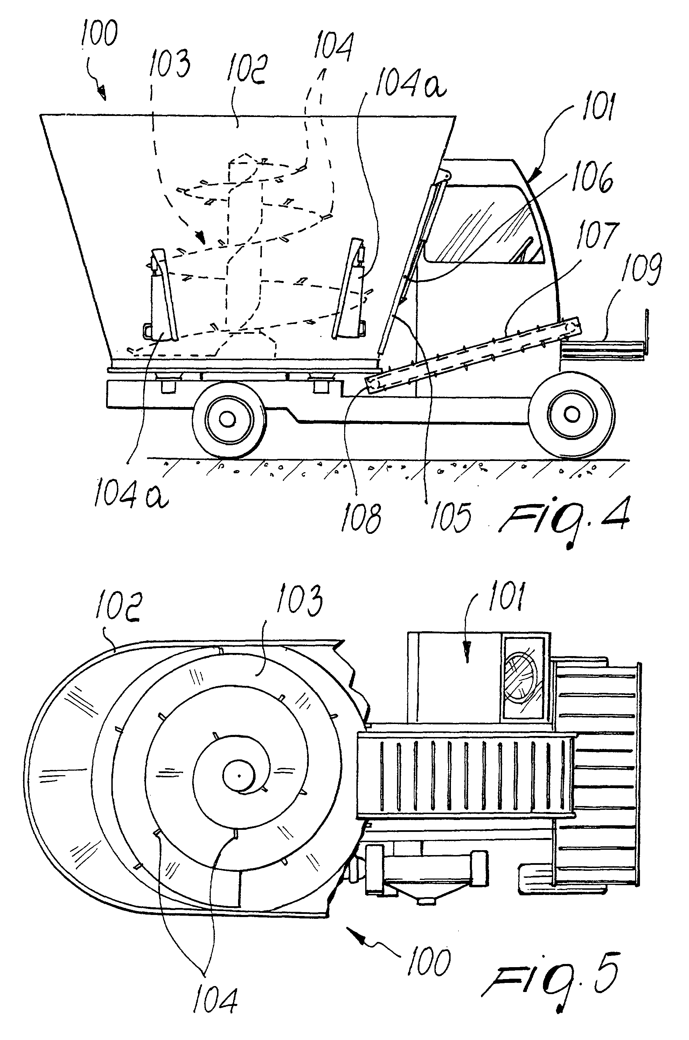

With particular reference to Figures 4 and 5, an improved truck for shredding and mixing products for zootechnical use, according to the invention, is generally designated by the reference numeral 100 in a second embodiment.

In particular, the truck 100 is of the self-propelled type and also comprises a driver's cabin 101.

The truck 100 is also provided with a frustum-shaped container 102 which tapers downward, with a rotating scroll 103 which has a vertical axis and an external profile which lies on a substantially conical imaginary surface whereat shredding blades 104 are fitted.

Complementary blades 104a protrude from the internal surface of the container 102.

The container 102 has an opening 105 for the passage of the shredded and mixed fodder which faces the direction of motion of the truck 100 and is associated with a closure door 106 which moves in a vertical shutter-like manner.

The truck 100 comprises, at the outlet of the opening 105, two conveyor belts for conveying and distributing the fodder: a first conveyor belt 107, which is arranged longitudinally with respect to the chassis of the truck 100 and is inclined with respect to the ground, with a lower end 108 in the vicinity of the opening 105, and a second conveyor belt 109, which lies transversely to the first one 107 and is adjacent to the upper vertex thereof.

There is also a gate 109a similar to the preceding one 21.

Reference is made to the description of the truck 10 of the first embodiment for further constructive details.

In practice it has been observed that the present invention has achieved the intended aim and objects.

In particular, it should be observed that the structure of the distribution means allows both to reach beyond the height of some troughs and to reach them even considerably beyond the transverse dimensions of the truck.

Moreover, in the case of a self-propelled truck, attention is drawn to the excellent view of the state of the distribution of the fodder provided to the operator/driver without having to leave the cabin, furthermore allowing to monitor the product being discharged and the livestock at the same time.

The arrangement of the conveyor belts as described also allows to provide spaces which can be utilized to accommodate auxiliary equipment or motor drives.

In particular, it has been possible to move the cabin closer to the container and reduce the distance between the wheels, consequently reducing the overall dimensions of the truck and achieving space optimization.

It should also be noted that the particular structure of the distribution means constituted by the combination of the first and second conveyor belts does not affect in any way the weighing of the product that is distributed, since the belts are rigidly coupled to the container so as to constitute a very specific tare which can accordingly be easily eliminated when calculating the net weight of the distributed fodder.

It should also be noted that the inclined longitudinal belt has the advantage of conveying the product in the direction in which it is to fall (not at right angles, as currently occurs), consequently avoiding the creation of friction angles and performing a first dosage, decreasing the stress to which the transverse conveyor belt is subjected.

A consequent important effect is the possibility to use a belt made of plastics, rather than one having a metal structure, which can have a chosen speed for propelling the product into the trough.

It should also be noted that the livestock is moved further away from the discharge elements, preventing the livestock from moving closer and amputating their tongue as currently occurs.

Other advantages observed with respect to conventional trucks are:
-- the inside of the container cannot be accessed easily, as currently occurs, through the belt and the discharge door;
-- the discharging action is more uniform, since the longitudinal belt acts as a deposition surface when the initial lower part of the scroll is not adjacent to the opening;
-- the discharge extensions currently used in many cases because the discharge is currently not adequate to the requirements of stables are eliminated;
-- there are no more constraints for positioning the complementary blades, as currently entailed by the existing metal plates for protecting the belt;
-- in towed trucks, the discharge is now closer to the wheels of the tractor and this increases visibility, so as to avoid, during maneuvers, any collision against obstacles with the discharge belt.

The present invention is susceptible of numerous modifications and variations, such as the fact that the container may also be horizontal with horizontal internal scrolls.

The technical details may be replaced with other technically equivalent elements.

The materials and the dimensions may be any according to requirements.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A truck (10) for shredding and mixing products for zootechnical use, which comprises, on a self-propelled or towed wheeled chassis (11), a mixing container (13) which contains one or more rotating scrolls (14) provided with shredding blades (14a), said container (13) having a front opening (15) for the passage of shredded and mixed fodder, said opening being associated with a closure door (16) which has a vertical shutter-like movement, **characterized in that** it comprises, at the outlet of said opening (15), two continuous conveyance elements for conveying and distributing the fodder, a first one (18) of said conveyance elements being arranged longitudinally with respect to the chassis (11) and being arranged adjacent to said opening (15), a second one (20; 109) of said conveyance elements being arranged transversely with respect to said first one (18), from which it receives the fodder.

2. The truck (10) according to claim 1, **characterized in that** said container (13) is frustum-shaped and tapers downward, with a scroll (14) which rotates about a vertical axis and has an external profile which lies on a substantially conical imaginary surface whereat shredder blades (14a) are fitted.

3. The truck (10) according to claim 1, **characterized in that** said continuous conveyance elements are conveyor belts.

4. The truck (10) according to claim 1, **characterized in that** said first conveyance element (18) is inclined with respect to the ground, with its lower end adjacent to said opening (15), and **in that** said second conveyance element (20), arranged transversely to the first one (18), is adjacent to the upper end thereof, from which it receives the fodder.

5. The truck (10) according to claim 1, **characterized in that** said second conveyance element (20) has a gate (21) along the outer edge with respect to said container (13).

6. The truck (10) according to claim 5, **characterized in that** said gate (21) can be turned over outward with respect to the container (13).

7. The truck (10) according to claim 1, **characterized in that** said second conveyance element (20) is pivoted to a supporting structure (22) so as to oscillate, being moved by corresponding actuation means, with a rotation axis which is substantially parallel to said first conveyance element (18).

8. The truck (10) according to claim 1, **characterized in that** said second conveyance element (20) is movably supported by a structure so as to perform a translatory motion, in association with corresponding actuation means, in a direction which is substantially parallel to its longitudinal extension, so as to protrude from the transverse dimensions of said truck 10.

9. The truck (10) according to claim 1, **characterized in that** it comprises a finned roller (23) which is arranged substantially so as to lie above said first conveyance element (18) adjacent to said opening (15).

10. The truck (10) according to claim 9, **characterized in that** said finned roller (23) is supported by a pivoted structure which allows, by means of an actuator, oscillating movements thereof in order to make it enter the container (13) at least partially.

11. The truck (10) according to claim 1, **characterized in that** a gate is arranged in front of said opening (15) of said container (13).

12. The truck (10) according to claim 1, **characterized in that** it comprises a blower (24) for aspirating the fodder from said container (13) and for discharging it so as to produce litters.

13. The truck (10) according to claim 1, **characterized in that** at least one magnet (28) cooperates with at least one of said continuous conveyance elements, said magnet (28) being installed adjacent to a product passage region and being adapted to retain any potentially damaging metallic objects.

14. The truck (10) according to claim 1, **characterized in that** said container (13) and said first and second conveyance elements are mutually rigidly coupled and rest on load cells (25).

15. The truck according to claim 1, **characterized in that** said second conveyance element (109) is arranged in front of the driver's cabin (101) of said truck.

## Patentansprüche

1. Wagen (10) zum Zerreißen und Mischen von Material für zootechnische Anwendungen, umfassend, auf einem selbstfahrenden oder geschleppten Chassis (11) mit Rädern, einen Mischbehälter (13), der eine oder mehrere rotierende Schnecken (14) enthält, welche mit Reißmessern (14a) versehen sind, wobei der Behälter (13) eine vorderseitige Öffnung (15) für den Durchgang von zerrissenem und gemischten Futter aufweist und diese Öffnung einer Schließtür (16), mit vertikaler schieberartiger Bewegung, zugeordnet ist, **dadurch gekennzeichnet, dass** er umfasst: zwei kontinuierliche Förderelemente am Auslass der genannten Öffnung (15) für das Fördern und Verteilen des Futters, wobei ein erstes (18) dieser Förderelemente in Längsrichtung, in Bezug auf das Chassis (11), und der Öffnung (15) benachbart angeordnet ist und wobei ein zweites (20; 109) der Förderelemente in Bezug auf das erste Förderelement (18), von dem es das Futtermaterial erhält, in Querrichtung angeordnet ist.

2. Wagen (10) nach Anspruch 1, **dadurch gekennzeichnet, dass** der Behälter (13) kegelstumpfförmig ist und sich nach unten verjüngt, mit einer Schnecke (14), die um eine vertikale Achse rotiert und ein externes Profil aufweist, das auf einer im wesentlichen konischen imaginären Fläche liegt und an dem Reißmesser (14a) montiert sind.

3. Wagen (10) nach Anspruch 1, **dadurch gekennzeichnet, dass** die kontinuierlichen Förderelemente Förderbänder sind.

4. Wagen (10) nach Anspruch 1, **dadurch gekennzeichnet, dass** das erste Förderelement (18) in Bezug auf den Boden geneigt ist, wobei sein unteres Ende der Öffnung (15) benachbart ist, und dass das zweite Förderelement (20), das quer zum ersten (18) angeordnet ist, dessen oberem Ende benachbart angeordnet ist, von dem es das Futtermaterial erhält.

5. Wagen (10) nach Anspruch 1, **dadurch gekennzeichnet, dass** das zweite Förderelement (20) ein Tor (21) entlang der in Bezug auf den Behälter (13) äußeren Kante aufweist.

6. Wagen (10) nach Anspruch 5, **dadurch gekennzeichnet, dass** das Tor (21) in Bezug auf den Behälter (13) nach außen umgewendet werden kann.

7. Wagen (10) nach Anspruch 1, **dadurch gekennzeichnet, dass** das zweite Förderelement (20) schwenkbar an einer Tragestruktur (22) angeordnet ist, so dass es, bewegt durch entsprechende Betätigungsmittel, schwingt, und zwar mit einer Rotationsachse, die im wesentlichen parallel zum ersten Förderelement (18) ist.

8. Wagen (10) nach Anspruch 1, **dadurch gekennzeichnet, dass** das zweite Förderelement (20) derart beweglich von einer Struktur getragen wird, dass es, in Verbindung mit entsprechenden Betätigungsmitteln, eine Schubbewegung in einer Richtung im wesentlichen parallel zu seiner Längsausdehnung ausführt, so dass es aus der Querausdehnung des Wagens (10) hervorragt.

9. Wagen (10) nach Anspruch 1, **dadurch gekennzeichnet, dass** er eine Flossenwalze (23) umfasst, die im wesentlichen so angeordnet ist, dass sie sich über dem ersten Förderelement (18), nahe der Öffnung (15) befindet.

10. Wagen (10) nach Anspruch 9, dadurch gekennzeichet, dass die Flossenwalze (23) durch eine schwenkbar angeordnete Struktur getragen wird, welche, mittels eines Betätigungselementes, eine schwingende Bewegung der Walze ermöglicht, um diese wenigstens teilweise in den Behälter (13) eintreten zu lassen.

11. Wagen (10) nach Anspruch 1, **dadurch gekennzeichnet, dass** vor der Öffnung (15) des Behälters (13) ein Tor angeordnet ist.

12. Wagen (10) nach Anspruch 1, **dadurch gekennzeichnet, dass** er ein Gebläse (24) zum Ansaugen des Futters aus dem Behälter (13) und zum Austragen desselben zur Erzeugung von Abfällen umfasst.

13. Wagen (10) nach Anspruch 1, **dadurch gekennzeichnet, dass** wenigstens ein Magnet (28) mit wenigstens einem der kontinuierlichen Förderelemente zusammenwirkt, wobei der Magnet (28) in der Nähe eines Materialdurchgangsbereichs installiert und so geartet ist, dass er etwaige, potentiell schädliche metallische Objekte zurückhält.

14. Wagen (10) nach Anspruch 1, **dadurch gekennzeichnet, dass** der Behälter (13) und das erste und zweite Förderelement gegenseitig fest verbunden sind und auf Messdosen (25) aufliegen.

15. Wagen nach Anspruch 1, **dadurch gekennzeichnet, dass** das zweite Förderelement (109) vor der Fahrerkabine (101) des Wagens angeordnet ist.

## Revendications

1. Véhicule (10) pour hacher et mélanger des produits à destination zootechnique, comprenant, sur un châssis (11) autopropulsé où à roues tractées, un réservoir mélangeur (13) qui contient une ou plusieurs spirales rotatives (14) munies de lames de hachage (14a), ledit réservoir (13) ayant une ouverture frontale (15) pour le passage de denrées fourragères hachées et mélangées, ladite ouverture étant associée à une porte de fermeture (16) qui a un mouvement à la façon d'un volet obturateur, **caractérisé en ce qu'**il comprend, au niveau de la sortie de ladite ouverture (15), deux éléments de transport continu pour transporter et distribuer les denrées fourragères, un premier (18) desdits éléments de transport étant agencé dans le sens longitudinal par rapport au châssis (11) et étant agencé de façon adjacente à ladite ouverture (15), un deuxième (20;109) desdits éléments de transport étant agencé dans le sens transversal par rapport au premier (18), à partir duquel il reçoit les denrées fourragères.

2. Véhicule (10) selon la revendication 1, **caractérisé en ce que** ledit réservoir (13) est de forme tronconique et se rétrécit vers la base, avec une spirale (14) qui tourne autour d'un axe vertical et a un profil externe qui repose sur une surface imaginaire essentiellement conique où sont installées des lames de hacheur (14a).

3. Véhicule (10) selon la revendication 1, **caractérisé en ce que** lesdits éléments de transport continu sont des bandes transporteuses.

4. Véhicule (10) selon la revendication 1, **caractérisé en ce que** ledit premier élément de transport (18) est incliné par rapport au sol, avec son extrémité intérieure adjacente à ladite ouverture (15), et **en ce que** ledit deuxième élément de transport (20), agencé transversalement au premier élément (18), est adjacent à son extrémité supérieure à partir de laquelle il reçoit les denrées fourragères.

5. Véhicule (10) selon la revendication 1, **caractérisé en ce que** ledit deuxième élément de transport (20) a une grille (21) le long du bord extérieur par rapport audit réservoir (13).

6. Véhicule (10) selon la revendication 5, **caractérisé en ce que** ladite grille (21) peut être retournée vers l'extérieur par rapport au réservoir (13).

7. Véhicule (10) selon la revendication 1, **caractérisé en ce que** ledit deuxième élément de transport (20) est mis en pivotement vers une structure de support (22) de façon à osciller, étant déplacé par des moyens d'actionnement correspondants, avec un axe de rotation qui est essentiellement parallèle audit premier élément de transport (18).

8. Véhicule (10) selon la revendication 1, **caractérisé en ce que** ledit deuxième élément de transport (20) est supporté de façon mobile par une structure de façon à mettre en oeuvre un mouvement de translation, en association avec des moyens d'actionnement correspondants, dans une direction qui est essentiellement parallèle à son prolongement longitudinal, de façon à dépasser des dimensions transversales dudit véhicule (10).

9. Véhicule (10) selon la revendication 1, **caractérisé en ce qu'**il comprend un rouleau à ailettes (23) qui est agencé essentiellement de façon à s'étendre au-dessus dudit premier mécanisme de transport (18) de façon adjacente à ladite ouverture (15).

10. Véhicule (10) selon la revendication 9, **caractérisé en ce que** ledit rouleau à ailettes (23) est supporté par une structure mise en pivotement qui permet, au moyen d'un actionneur, des mouvements oscillants afin de le faire entrer dans le réservoir (13) au moins partiellement.

11. Véhicule (10) selon la revendication 1, **caractérisé en ce qu'**une grille est agencée en face de ladite ouverture (15) dudit réservoir (13).

12. Véhicule (10) selon la revendication 1, **caractérisé en ce qu'**il comprend un ventilateur (24) pour aspirer les denrées fourragères à partir dudit réservoir (13) et les décharger afin de produire une litière.

13. Véhicule (10) selon la revendication 1, **caractérisé en ce qu'**au moins un aimant (28) coopère avec au moins un desdits éléments de transport continu, ledit aimant (28) étant installé de façon adjacente à une région de passage du produit et étant adapté pour retenir tout objet métallique potentiellement dommageable.

14. Véhicule (10) selon la revendication 1, **caractérisé en ce que** ledit réservoir (13) et lesdits premier et deuxième éléments de transport sont couplés mutuellement de façon rigide et reposent sur des cellules de pesage (25).

15. Véhicule selon la revendication 1, **caractérisé en ce que** ledit second élément (109) est disposé en face de la cabine du conducteur (101) dudit véhicule.
